# EUROPÄISCHE PATENTANMELDUNG

(11) **EP 3 081 444 A1**
(43) Veröffentlichungstag der Anmeldung: **19.10.2016**
(21) Anmeldenummer: 15163760.0
(22) Anmeldetag: 15.04.2015
(51) Int. Cl.: B60S 5/04, B60C 99/00

(54) **Verfahren zur Einstellung von Reifendrücken**

(71) Anmelder: KLS Motorsport GmbH & Co. KG, 82065 Baierbrunn (DE)
(72) Erfinder: Leonhardt, Tobias, 82065 Baierbrunn (DE)
(74) Vertreter: Limbeck, Achim

(57) **Zusammenfassung**

Die vorliegende Erfindung betrifft ein Verfahren zur Einstellung und Nachjustierung von Reifendrücken an mehreren Rädern, gekennzeichnet durch die folgenden Verfahrensschritte:
a) Ermittlung der Rad und/oder Reifentemperatur mittels Sensoren;
b) Kalkulation des tatsächlichen Temperaturniveaus des jeweiligen Rades und/oder Reifens (5) aus den ermittelten Werten (3);
c) Ermittlung der Reifendrücke;
d) Berechnung des Korrekturfaktors für den jeweils einzustellenden Kaltluftdruck;
e) Einstellung der ermittelten Reifenkaltdrücke durch kontrolliertes Ablassen oder Nachpumpen.

## Beschreibung

### Technisches Gebiet

Die vorliegende Erfindung betrifft ein Verfahren zur Einstellung von Reifendrücken an mehreren Rädern. Ferner betrifft die vorliegende Erfindung eine Vorrichtung zur Durchführung des vorliegenden Verfahrens.

### Stand der Technik

Reifendruckkontrollsysteme und Vorrichtungen zur Einstellung von Reifendrücken sind aus dem Stand der Technik hinlänglich bekannt. Reifendruckkontrollsysteme sind in der Regel mit einer in einem Luftreifen anzuordnenden Radelektronik ausgestattet, welche einen Drucksensor zum Messen des Reifendrucks oder einer Druckänderung und einen Sender zum Senden von Druckinformationen aufweist, wobei ein Empfänger und ein Steuergerät zum Auswerten von Druckinformationen vorgesehen sind. Die entsprechenden Werte können über ein Display (bspw. im Display des Fahrzeug oder auf einem außerhalb des Fahrzeugs vorgesehenen Anzeigegerät) abgelesen werden und die Reifendrücke entsprechend den abgelesenen Vorgaben an den Rädern eines Fahrzeuges einzeln über ein Reifendruckgerät eingestellt werden.

Üblicherweise wird angenommen, dass bei der (Kalt)Luftdruckeinstellung sämtliche Räder und Reifen das gleiche Temperaturniveau aufweisen. In der Praxis, insbesondere im Rennsport, ist dies aber aus diversen Gründen leider nicht immer der Fall. Stellt man bei den Rädern mit unterschiedlichen Ausgangstemperaturen nun gleiche Drücke ein, so wird man im Fahrbetrieb (wenn alle Räder also tatsächlich auf einem gleichen Temperaturniveau sind) unterschiedliche Drücke und mithin ein dementsprechend schlechtes Fahrverhalten erhalten.

### Darstellung der Erfindung

Der vorliegenden Erfindung liegt daher die Aufgabe zu Grunde, ein Verfahren zu schaffen, welches die vorgenannten Nachteile ausräumt und welches geeignet ist, an sämtlichen Rädern bzw. Reifen eines Fahrzeuges exakt kalkulierbare Drücke ermitteln und einstellen zu können, welche an die jeweiligen, individuell ermittelten Temperaturen eines jeden einzelnen Rades und/oder Reifens angepasst sind.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Verfahrens sind in den abhängigen Unteransprüchen angegeben.

Erfindungsgemäß ist ein Verfahren der eingangs genannten Art gekennzeichnet durch die folgenden Verfahrensschritte:

a) Zunächst erfolgt eine Ermittlung der tatsächlichen Rad und/oder Reifentemperatur mittels Sensoren an sämtlichen Rädern des Fahrzeuges mittels Sensoren. Als Sensoren kommen vorzugsweise sog. TPMS Sensoren oder jegliche anderen, entsprechend geeigneten Sensoren mit einer Sendeeinheit zum Einsatz.

Die verwendeten Sensoren übermitteln vorteilhaft zum einen die Felgentemperatur, und vorzugsweise zum anderen z.B. per Infrarot die Temperatur auf der Innenseite der Reifenlauffläche. In einer weiteren Ausführungsform des Verfahrens werden zusätzlich über entsprechende Temperatursensoren die Temperaturen der Reifenoberflächen ermittelt, vorzugsweise an den Seitenwänden sowie auf der Lauffläche.

b) Die ermittelten Werte werden in einem weiteren Verfahrensschritt zur Kalkulation des tatsächlichen Temperaturniveaus des jeweiligen Rades herangezogen. Anmerkung: Unter b) könnten ggfs. noch weitere Ausführungen zu dieser Methode ergänzt werden.

c) Wurde das tatsächliche Temperaturniveau eines jeden Rades und die entsprechenden Reifendrücke ermittelt, wird in einem nächsten Schritt d) der entsprechende Korrekturfaktor für den jeweils einzustellenden Kaltluftdruck berechnet und schließlich e) die ermittelten Reifenkaltdrücke durch kontrolliertes Ablassen oder Nachpumpen eingestellt.

In einer weiteren, vorteilhaften Ausführungsform der Erfindung wird darüber hinaus eine Feuchtemessung des im Inneren des Reifens befindlichen Gases durchgeführt. Feuchtigkeit in einem Rennreifen ist der Alptraum eines jeden Renningenieurs: Wenn die Feuchte bei Temperaturen >100°C verdampft, steigt der Reifendruck explosionsartig an und der Fahrer kann die Box ansteuern. Deshalb ist es vorteilhaft, dass bei erhöhtem Feuchtegehalt ein Alarm ausgelöst wird.

In einer besonders vorteilhaften Ausführungsform der Erfindung ist eine Speichereinheit vorgesehen, in der die ermittelten Werte gespeichert werden.

### Kurzbeschreibung der Zeichnung

Weitere Ziele, Merkmale, Vorteile und Anwendungsmöglichkeiten des erfindungsgemäßen Verfahrens sowie der Vorrichtung zur Durchführung des Verfahrens ergeben sich aus der nachfolgenden Beschreibung eines Ausführungsbeispiels anhand der Zeichnung. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

### In der Zeichnung zeigt

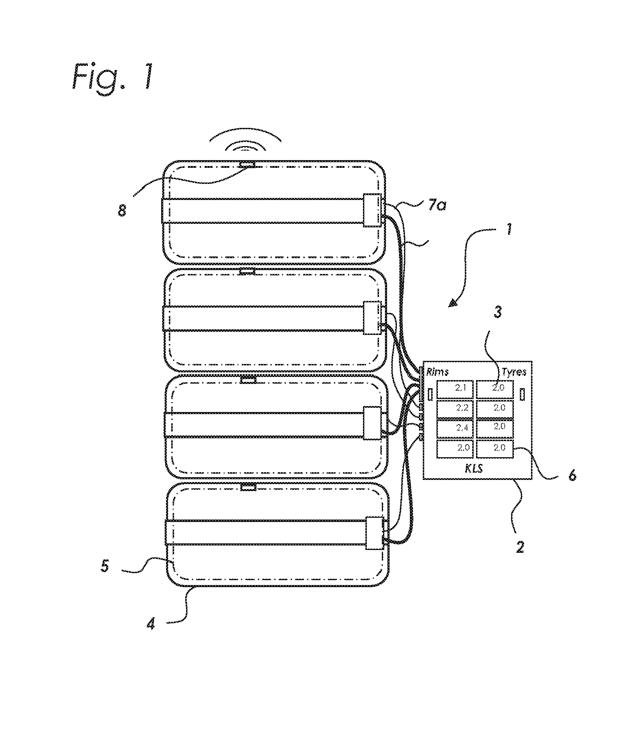

Fig.1 eine Vorrichtung in einer schematischen Darstellung.

### Ausführung der Erfindung

Wie aus Fig.1 ersichtlich, umfasst die Vorrichtung zur Durchführung des erfindungsgemäßen Verfahrens ein Steuergerät 2 zur Ermittlung und Auswertung der Temperaturen, welches mit den verwendeten Sensoren entweder kabelgebunden oder kabellos verbunden ist. An dem Steuergerät 2 ist mindestens ein Display 8 vorgesehen, welches die ermittelten und errechneten Werte ausgibt.

Ganz besonders bevorzugt ist das Steuergerät 2 mit mehreren Heizdecken 4 verbunden, welche mit Temperatursensoren 8 ausgestattet sind, welche die Temperaturen an den Reifenoberflächen der Reifen 5 ermitteln und bspw. per Bluetooth oder auf sonstige Weise an eine Empfangseinheit des Steuergerätes 2 senden. Weitere Sensoren sind vorzugsweise in Form von TPMS Sensoren an den Felgen angeordnet.

In einer weiteren bevorzugten Ausführung der Erfindung umfassen die Heizdecken 4 Sensoren, welche die Temperaturen an den Seitenwänden sowie auf der Lauffläche der Reifen 5 ermitteln.

Das Steuergerät 2 besteht vorzugsweise aus einem Gehäuse, aus dem u.a. elektrische Zuleitungen 7a für die Heizdecken 4 und Zuleitungen 7b für die Druckanschlüsse ausgehen. Die Zuleitungen 7b der Druckanschlüsse werden mit dem jeweiligen Ventil der Räder verbunden.

Die Bedienung erfolgt vorzugsweise entweder über ein Touchscreen oder über einen zentralen Computer, mit dem die einzelnen Steuergeräte 2 (dies können bis zu 15 Stück je Fahrer sein) vernetzt sind. Die Vernetzung erfolgt über Kabel und/oder drahtlos.

Wie bereits beschrieben, stellt das Steuergerät 2 in Verbindung mit einer durch das Steuergerät gesteuerten, vorzugsweise externen Druckluftpumpe, an die jedes Steuergerät 2 angeschlossen ist, als letzten Verfahrensschritt den ermittelten, optimalen Reifenkaltdruck automatisch ein. Dies geschieht vorzugsweise durch kontrolliertes Ablassen oder Nachpumpen mit Hilfe der externen Druckluftpumpe. Es ist allerdings auch eine Einstellung bzw. Nachjustierung der Reifendrücke bei erreichter Vorheiztemperatur ist möglich.

Eine Druckjustierung mittels des Steuergerätes 2 hat u.a. folgenden weiteren, großen Vorteil: Die Räder werden bei Rennfahrzeugen grundsätzlich im Stapel beheizt, wie dies in Fig.1 verdeutlicht ist. Soll nun kurz vor dem Ausrücken auf die Strecke bzw. der Montage an das Fahrzeug nochmal der Druck geändert werden, muss dazu nicht der Stapel auseinander genommen werden. En Abbauen des Stapels bedeutet Wärmeverlust an den Felgen und damit eine unerwünschte, negative Beeinflussung des Reifendruckes.

Das Steuergerät 2 überwacht auch den Druckanstieg im Verhältnis zum Temperaturanstieg und meldet Leckage oder ähnliche Abweichungen per Alarm. Das Steuergerät 2 verfügt weiters über eine Möglichkeit zur Feuchtemessung des im Inneren des Reifens befindlichen Gases. Dazu lässt das Steuergerät 2 vor dem Heizvorgang eine entsprechende Menge an Gas aus dem jeweiligen Reifen ab und führt die Messung durch.

Das erfindungsgemäße Verfahren und seine Vorrichtung beschränken sich in ihren Ausführungen nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Vorrichtung
- 2: Steuergerät
- 3: Werte
- 4: Heizdecken
- 5: Reifen
- 6: Display
- 7a: elektrische Zuleitungen
- 7b: Druckluftzuleitungen
- 8: Temperatursensoren

## Patentansprüche

1. Verfahren zur Einstellung und Nachjustierung von Reifendrücken an mehreren Rädern,
**gekennzeichnet durch** die folgenden Verfahrensschritte:
a) Ermittlung der Rad und/oder Reifentemperatur mittels Sensoren;
b) Kalkulation des tatsächlichen Temperaturniveaus des jeweiligen Rades und/oder Reifens (5) aus den ermittelten Werten (3);
c) Ermittlung der Reifendrücke;
d) Berechnung des Korrekturfaktors für den jeweils einzustellenden Kaltluftdruck;
e) Einstellung der ermittelten Reifenkaltdrücke **durch** kontrolliertes Ablassen oder Nachpumpen.

2. Verfahren nach Anspruch 1,
**dadurch gekennzeichnet, dass**
eine Ermittlung der Felgentemperaturen erfolgt.

3. Verfahren nach den Ansprüchen 1 und 2,
**dadurch gekennzeichnet, dass**
eine Ermittlung der Temperaturen der Innenseite der Reifenlaufflächen erfolgt.

4. Verfahren nach einem der vorangegangenen Ansprüche,
**dadurch gekennzeichnet, dass**
eine Ermittlung der Temperaturen der Reifenoberflächen erfolgt.

5. Verfahren nach einem der vorangegangenen Ansprüche,
**dadurch gekennzeichnet, dass**
eine Feuchtemessung des im Inneren des Reifens befindlichen Gases durchgeführt wird.

6. Vorrichtung (1) zur Durchführung des Verfahrens nach einem der vorangegangenen Ansprüche,
**dadurch gekennzeichnet, dass**
es ein Steuergerät (2) zur Ermittlung und Auswertung der Temperaturen umfasst, welches mit den Sensoren verbunden ist.

7. Vorrichtung (1) nach Anspruch 5,
**dadurch gekennzeichnet, dass**
es mehrere mit dem Steuergerät (2) verbundene Heizdecken (4) umfasst, welche mit Temperatursensoren ausgestattet sind, welche die Temperaturen an den Reifenoberflächen der Reifen (5) ermitteln.

8. Vorrichtung nach Anspruch 6,
**dadurch gekennzeichnet, dass**
die Heizdecken (4) Sensoren umfassen, welche die Temperaturen an den Seitenwänden und auf der Lauffläche der Reifen (5) ermitteln.

9. Vorrichtung nach einem der vorangegangenen Ansprüche,
**dadurch gekennzeichnet, dass**
mindestens eine interne oder externe Druckluftpumpe vorgesehen ist, welche über das Steuergerät (2) gesteuert wird, wobei sämtliche Reifen (5) mit den Druckanschlüssen der Druckluftpumpe über Zuleitungen verbunden sind.

10. Vorrichtung nach einem der vorangegangenen Ansprüche,
**dadurch gekennzeichnet, dass**
eine Speichereinheit vorgesehen ist, in der die ermittelten Werte (3) gespeichert werden.
